# EUROPÄISCHE PATENTANMELDUNG

(11) **EP 2 674 083 A1**
(43) Veröffentlichungstag der Anmeldung: **18.12.2013**
(21) Anmeldenummer: 13171475.0
(22) Anmeldetag: 11.06.2013
(51) Int. Cl.: A47J 37/07

(54) **Grillvorrichtung für die Zubereitung von Speisen**

(30) Priorität: 11.06.2012 DE 102012011372
(71) Anmelder: Maschinenbau Heinrich Brinkmann KG, 33689 Bielefeld (DE)
(72) Erfinder: Brinkmann, Heinz, 33689 Bielefeld (DE)
(74) Vertreter: Brandt, Detlef

(57) **Zusammenfassung**

Es wird eine Grillvorrichtung zur Zubereitung von Speisen bestehend aus einem Gestell (1) mit mindestens drei Standfüßen (2), einer am Gestell (1) festgelegten Feuerschale (4) zur Aufnahme des Brennstoffes und einer über der Feuerschale (4) höhenverstellbar am Gestell (1) aufgehängten Grillrosthalterung (7), vorgestellt, bei der erfindungsgemäß die Grillrosthalterung (7) eine im wesentlichen senkrecht angeordnete Haltestange (8) aufweist, an welcher an ihrem unteren, der Feuerschale (7) zugewandten Ende ein aus zwei gebogenen Gabelarmen (11, 12) bestehendes Hängeelement (9) angeordnet ist, wobei an dem der Haltestange (8) abgewandten Ende ein Grillrost (10) dergestalt festgelegt ist, dass der Raum zwischen Grillrostoberfläche und Gabelarmverbindungspunkt (13) frei zugänglich ist.

## Beschreibung

### Technisches Umfeld

Die Erfindung betrifft eine Grillvorrichtung zur Zubereitung von Speisen, bestehend aus einem Gestell mit mindestens drei Standfüßen, einer am Gestell festgelegten Feuerschale zur Aufnahme des Brennstoffes und einer über der Feuerschale höhenverstellbar am Gestell aufgehängten Grillrosthalterung.

### Stand der Technik

Vorrichtungen zur Zubereitung von Speisen im Freien sind in unterschiedlicher Ausgestaltung aus dem Stand der Technik bekannt. So werden beispielsweise zum Grillen von Fleisch oder Bratwürsten bekannte Holzkohle-, Gas- oder Elektrogrills benutzt.

Grillvorrichtungen, welche mit Holzkohlebrennstoff beheizt werden, sind oftmals so aufgebaut, dass an einer Feuerschale zur Aufnahme des Brennstoffes drei oder mehr Standfüße festgelegt sind, wobei der Grillrost unmittelbar auf den Rand der Feuerschale aufsetzt wird. Über dem Grillrost kann je nach Ausstattung der Grillvorrichtung eine in der Regel halbkugelförmige Abdeckung aufgesetzt werden, die zur Wärmereflektion dient. Nachteilig bei diesen bekannten Konstruktionen ist die schlechte Zugänglichkeit der Feuerschale insbesondere beim Nachfüllen mit Holzkohle.

Darüber hinaus sind insbesondere bei Grills mit größerer Grillrostfläche sogenannte Dreibahnstative bekannt, bei denen drei einzelne Standfüße an ihren dem Boden abgewandten freien Ende zusammengeführt und aneinander fixiert werden. An dem hierdurch geschaffenen zentralen Verbindungspunkt wird dann in aller Regel eine Kette aufgehängt, an der wiederum der Grillrost mittig zwischen den Standbeinen frei hängend festgelegt ist. Unterhalb des Grillrostes wird in aller Regel an diesem befestigt ebenfalls die Feuerschale aufgehängt, sofern sie nicht durch ein separates Standgestell unterhalb des Grillrostes angeordnet ist.

Nachteil der letztgenannten Grillvorrichtung ist es, dass durch die oberhalb des Grillrostes zusammenlaufenden Standfüße die Zugänglichkeit des Grillrostes nicht unwesentlich eingeschränkt ist.

### Aufgabe der Erfindung

Ausgehend von den aus dem Stand der Technik bekannten Grillvorrichtungen ist es Aufgabe der Erfindung, eine Grillvorrichtung zur Zubereitung von Speisen mit dem in Anspruch 1 genannten gattungsbildenden Merkmalen so weiter zu entwickeln, dass die Handhabung der Grillvorrichtung insgesamt signifikant vergrößert wird, wobei gleichzeitig eine kostengünstige Herstellung sowie eine leichte Reinigung des Grillgerätes gewährleistet sein soll.

### Lösung der Aufgabe

Die gestellte Aufgabe wird in Zusammenschau mit den gattungsbildenden Merkmalen einer Grillvorrichtung nach Anspruch 1 durch die im kennzeichnenden Teil des Hauptanspruches offenbarte technische Lehre gelöst.

Erfindungswesentlich dabei ist es, dass bei eine Grillvorrichtung zur Zubereitung von Speisen, bestehend aus einem Gestell mit mindestens drei Standfüßen, einer am Gestell festgelegten Feuerschale zur Aufnahme des Brennstoffes und einer über der Grillschale höhenverstellbar am Gestell aufgehängten Grillrosthalterung die Grillrosthalterung eine im wesentlichen senkrecht angeordnete Haltestange aufweist, an welcher an ihrem unteren, der Feuerschale zugewandten Ende, ein aus zwei gebogenen Gabelarmen bestehendes Hängeelement angeordnet ist, wobei an dem der Haltestange abgewandten Ende ein Grillrost dergestalt festgelegt ist, dass der Raum zwischen Grillrostoberfläche und Gabelarmverbin-dungspunkt frei zugänglich ist.

Durch die geschilderte konstruktive Gestaltung ist insbesondere für Grillvorrichtungen mit größeren Grillrostoberflächen eine freie Zugänglichkeit des gesamten Grillrostes jederzeit gewährleistet. Durch die gebogenen Gabelarme besteht für den Grillbenutzer keine Veranlassung mehr, zwischen zwei Standfüßen hindurch auf das Grillgut zugreifen zu müssen.

Besondere Ausgestaltungen des Gegenstandes der Erfindung ergeben sich zusätzlich zur technischen Lehre des Anspruches 1 aus den auf den Hauptanspruch rückbezogenen Unteransprüchen.

Es hat sich insbesondere als vorteilhaft erwiesen, die Haltestange aus zwei mittels eines Schwenkgelenkes verbundenen Stangenelementen aufzubauen. Durch das Schwenkgelenk wird es ermöglicht, dass der untere Bereich der Haltestange, an dem der Grillrost mittels des aus zwei gebogenen Gabelarmen bestehenden Hängeelementes festgelegt ist, seitlich verschwenkt werden kann. Auf diese Weise kann die unter dem Grillrost liegende Feuerschale zwecks Nachfüllen von Brennstoff oder zu Reinigungszwecken leicht zugänglich gemacht werden, was insbesondere bei heißem Grillrost von Vorteil ist und der Arbeitssicherheit dient.

Darüber hinaus kann es zweckmäßig sein, die Grillvorrichtung so auszugestalten, dass das Gestell eine im wesentlichen halbkreisförmig gebogene Gestellstange aufweist, an deren dem Boden zugewandten unteren Ende die Standfüße und an deren oberen freien Ende eine Aufhängevorrichtung für die Grillrosthalterung angeordnet ist. Die gebogene Gestellstange ist nicht nur aus ästhetischen Gesichtspunkten sinnvoll, sondern darüber hinaus materialsparend, wobei eine klare Trennung zwischen Grillbereich mit Grillrost und Feuerschale und Standbereich am unteren Ende der Gestellstange gewährleistet ist.

Wie oben geschildert ist die Haltestange höhenverstellbar an dem Gestell bzw. der gebogenen Gestellstange festgelegt. Die Höhenverstellbarkeit ist in einer Aufhängevorrichtung integriert, welche entsprechend einer vorteilhaften Ausgestaltung ein Federelement aufweist, welches durch seine Federkraft mindestens einen Teil der durch die Grillrosthalterung bewirkten Gewichtskraft ausgleicht. Durch die geschilderte konstruktive Ausgestaltung wird insbesondere bei einer Vollbelegung des Grillrostes mit Fleisch oder Würstchen eine Verstellung des Grillrostes erleichtert, dadurch dass nach dem Lösen eines Feststellrades, welches zur Fixierung der Grillrosthalterung in unterschiedliche Höhenpositionen dient, der Grillrost zusammen mit der Haltestange gegen die Schwerkraft leicht angehoben werden kann.

Das Federelement kann dabei platzsparend und konstruktiv vorteilhaft gestaltet als die Haltestange umgreifende, oberhalb der Gestellstange angeordnete Schraubenfeder ausgebildet sein.

Es hat sich darüber hinaus als vorteilhaft erwiesen, das Schwenkgelenk als Kardangelenk auszubilden. Kardangelenke sind im Stand der Technik in unterschiedlichster Ausgestaltung bekannt und kostengünstig verfügbar, so dass sich die Herstellkosten für die erfindungsgemäße Grillvorrichtung klein halten lassen.

Zusätzlich vorteilhaft kann es sein, wenn am Gestell eine Arretiervorrichtung zum Einhängen des schräg gestellten Grillrostes angeordnet wird. Zur Erleichterung der Handhabung der erfindungsgemäßen Grillvorrichtung kann es darüber hinaus zweckmäßig sein, an der Gestellvorrichtung mindestens eine Halterung für eine Ablagevorrichtung anzuordnen. Die Ablagevorrichtung kann dabei ein oder mehrere Tablettvorrichtungen und/oder ein oder mehrere Flaschenhalter aufweisen. Durch die geschilderte konstruktive Gestaltung ist die Benutzung eines Beistelltisches oder dergleichen neben der erfindungsgemäßen Grillvorrichtung entbehrlich.

### Figurenbeschreibung

Im folgenden wird ein Ausführungsbeispiel des Gegenstandes der Erfindung anhand der beigefügten Zeichnungen näher erläutert. Es zeigt:
- Figur 1: eine perspektivische Gesamtdarstellung der erfindungsgemäßen Grillvorrichtung,

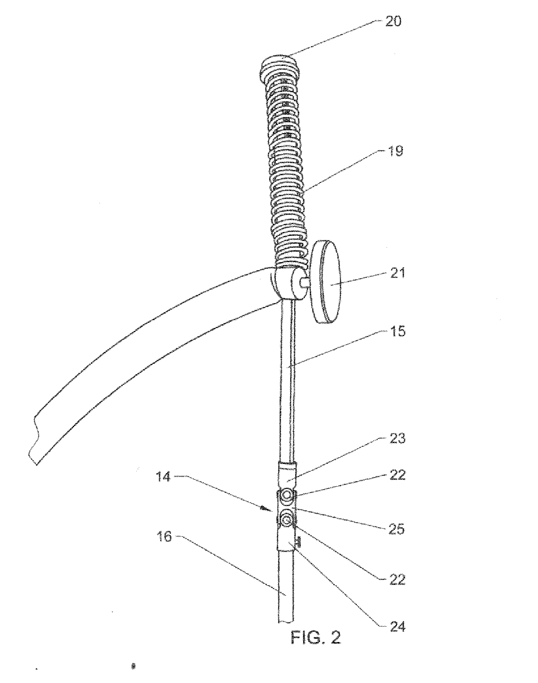

- Figur 2: eine vergrößerte Darstellung der Grillrosthalterung im oberen Bereich der Grillvorrichtung und
- Figur 3: eine perspektivische Darstellung der erfindungsgemäßen Grillvorrichtung mit angehobener Grillrosthalterung

Die erfindungsgemäße Grillvorrichtung weist als ein wesentliches Element ein Gestell 1 auf, welches im wesentlichen aus einer gebogenen Gestellstange 17 besteht. Am unteren, dem Boden zugewandten Ende der Gestellstange 17 ist diese mit drei Standfüßen 2 versehen. Die Standfüße 2 besitzen an ihrem freien unteren Ende jeweils eine Fußplatte 3, mit der verhindert wird, dass die Grillvorrichtung bei losem Untergrund mit ihren Standfüßen 2 zu sehr im Erdreich einsinkt.

Im unteren Bereich der Gestellstange 17 ist an dieser ein Haltearm 5 angeordnet, der wiederum an seinem freien Ende eine Feuerschale 4 trägt. Die Feuerschale 4 ist in Form einer runden Wanne ausgebildet und weist an ihrem hochstehenden Randbereich eine Vielzahl von Belüftungsöffnungen 6 auf. Diese Belüftungsöffnungen 6 dienen dazu, die Verbrennung der in der Feuerschale 4 befindlichen Holzkohle zu optimieren. Die Feuerschale selbst ist zweiteilig ausgebildet und besitzt einen unteren Ascheauffangbehälter sowie eine darüber angeordneten Rost zur Lagerung des Brennstoffes, welche voneinander trennbar sind. Am Brennstoffrost ist der mit den Belüftungsöffnungen 6 versehene Randbereich festgelegt. Der Ascheauffangbehälter ist mit dem Haltearm 5 verschraubt, so dass eine leichte Entsorgung der Asche erfolgen kann.

Zur Grillvorrichtung gehört darüber hinaus eine in ihrer Gesamtheit mit 7 bezeichnete Grillrosthalterung, die am oberen Ende der Gestellstange 17 mittels einer Aufhängevorrichtung 18 festgelegt ist. Die Grillrosthalterung 7 besteht aus einer Haltestange 8, an deren unteren freien Ende ein Hängeelement 9 befestigt ist. Das Hängeelement 9 besteht im wesentlichen aus zwei Gabelarmen 11 und 12, die an der Haltestange 8 in einem Gabelarmverbindungspunkt 13 zusammenlaufen. Am entgegengesetzten Ende sind die Enden der jeweiligen Gabelarme 11 und 12 an einem Grillrost 10 festgelegt.

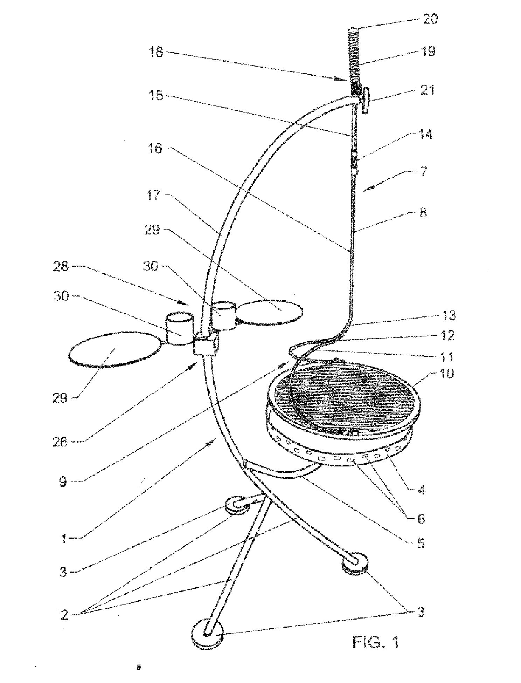

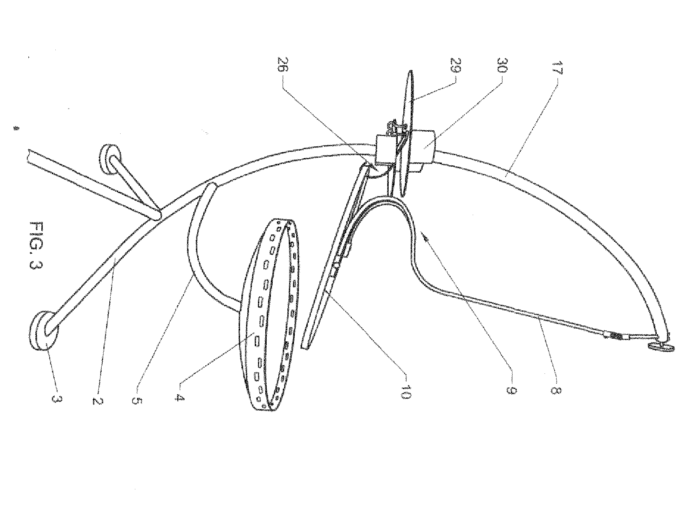

Die Gabelarme 11 und 12 besitzen, wie dies aus den Figuren 1 und 3 deutlich wird, eine geschwungene, im wesentliche halbrunde Form, und laufen von ihrem oberen Gabelarmverbindungspunkt 13 zu den Rändern des Grillrostes 10 und sind dort an diametral sich gegenüber liegenden Befestigungspunkten fixiert. Die Form der Grillrosthalterung und insbesondere des Hängeelementes 9 mit den Gabelarmen 11 und 12 bewirkt, dass die gesamte Oberfläche des Grillrostes 10 frei zugänglich ist. Zur leichteren Reinigung kann der Grillrost 10 von den Gabelarmen 11 und 12 getrennt werden.

Als weitere Besonderheit der erfindungsgemäßen Grillvorrichtung ist die in ihrer Gesamtheit mit 8 bezeichnete Haltestange in zwei Stangenelemente 15 und 16 aufgeteilt. Die Stangenelemente 15 und 16 sind mittels eines Schwenkgelenkes 14 miteinander verbunden. Das Schwenkgelenk 14 bewirkt eine Beweglichkeit des Grillrostes 10 mit den daran festgelegten Gabelarmen 11 und 12 in Richtung auf die Gestellstange 17. Insbesondere aus der Figur 3 wird deutlich, dass durch die Verschwenkung des Grillrostes 10 in Richtung auf die Gestellstange 17 die obere Öffnung der wannenartigen Feuerschale 4 gut zugänglich wird. Auf diese Weise kann sowohl eine problemlose Reinigung vorgenommen werden, als auch ein Nachfüllen mit Brennmaterial während des Grillens.

Zur Festlegung der gekippten Position des Grillrostes 10 ist die Gestellstange 17 mit einer Arretiervorrichtung 26 versehen. Die Arretiervorrichtung 26 weist einen Haken 27 auf, der im Randbereich des Grillrostes 10 eingehängt werden kann und so eine Fixierung des Grillrostes in der schräg gestellten Position, wie in Figur 3 ersichtlich, bewirkt.

Das Schwenkgelenk 14 im oberen Bereich der Haltestange 8 besteht im wesentlichen aus drei Teilen. Am Stangenelement 15 ist ein Endglied 23 angeordnet, welches über eine Drehachse 22 mit einem Zwischenglied 25 verbunden ist. Das Zwischenglied 25 wiederum ist mit einem am unteren Stangenelement 16 festgelegten Endglied 24 über eine Drehachse 22 verbunden. Durch die geschilderte Konstruktion ist die beschriebene Verschwenkung des Grillrostes 10, wie in der Figur 3 dargestellt, möglich.

Als weitere Besonderheit besitzt die erfindungsgemäße Grillvorrichtung in ihrem oberen Bereich der Gelenkstange 17 eine Aufhängevorrichtung 18, die ein Anheben der Grillrosthalterung 7 insbesondere bei belegtem Grillrost 10 erleichtert. Konstruktiv gesehen ist dafür das obere Stangenelement 15 durch eine geeignete Öffnung im freien Ende der Gestellstange 17 hindurchgeführt. Oberhalb der Gestellstange 17 befindet sich ein als Schraubenfeder ausgebildetes Federelement 19. Der Innenraum des Federelementes 19 wird von dem freien Ende des Stangenelementes 15 durchstoßen, wobei das freie Ende an seinem oberen aus dem Federelement 19 hervorstehenden Bereich mit einer Deckscheibe 20 versehen ist. Die geschilderte Konstruktion bewirkt, dass bei einem Absenken der Grillrosthalterung 7 die Schraubenfeder respektive das Federelement 19 zusammengepresst wird und dabei eine nach oben gerichtete Federkraft erzeugt.

Zur Fixierung der Haltestange 8 in abgesenktem Zustand ist ein Feststellrad 21 vorgesehen, welches das Stangenelement 15 innerhalb der Öffnung am freien Ende der Gestellstange 17 klemmt. Wird das Feststellrad 21 losgedreht, so wirkt die eben geschilderte Federkraft des Federelementes 19 entgegen der durch den Grillrost hervorgerufenen Gewichtskraft. Eine geeignete Wahl der Federrate des Federelementes 19 kann somit ein langsames und selbsttätiges Anheben des Grillrostes 10 bewirken, wobei ergonomisch gesehen ein Anheben des Grillrostes 10 von Hand schwieriger vorzunehmen als ein Absenken. Durch das Feststellrad 21 ist in jeder geeigneten Höhenstellung eine Festlegung des Grillrostes 10 möglich.

Um die Handhabung der erfindungsgemäßen Grillvorrichtung zusätzlich zu erleichtern, ist, wie aus den Figuren 1 und 3 ersichtlich, an der Arretiervorrichtung 26 eine zusätzliche Ablagevorrichtung 28 angeordnet. Die Ablagevorrichtung 28 besteht im vorliegenden Ausführungsbeispiel aus zwei Tablettflächen 29 und zwei Flaschenhaltern 30, die gegenüberliegend beidseitig der Gestellstange 17 angeordnet sind. Die Größe der Flaschenhalter 30 ist dabei so bemessen, dass sowohl Behältnisse für Grillsaucen oder dergleichen als auch Getränkeflaschen darin Platz finden können.

Wie aus der Gesamtbeschreibung ersichtlich, besitzt die erfindungsgemäße Grillvorrichtung eine Mehrzahl von besonderen Merkmalen, die die Handhabung der Grillvorrichtung wesentlich erleichtern und in dieser Form und Kombination aus dem Stand der Technik bislang nicht bekannt sind. Selbstverständlich ist eine andere Gestaltung des Schwenkgelenkes 14, der Arretiervorrichtung 26 sowie eine gegebenenfalls abgewandelte Form der Gabelarme 11 und 12 nicht dazu geeignet, sich aus dem Schutzbereich der Erfindung zu entfernen.

### Bezugszeichenliste:

- 1: Gestell
- 2: Standfuß
- 3: Fußplatte
- 4: Feuerschale
- 5: Haltearm
- 6: Belüftungsöffnung
- 7: Grillrosthalterung
- 8: Haltestange
- 9: Hängeelement
- 10: Grillrost
- 11: Gabelarm
- 12: Gabelarm
- 13: Gabelarmverbindungspunkt
- 14: Schwenkgelenk
- 15: Stangenelement
- 16: Stangenelement
- 17: Gestellstange
- 18: Aufhängevorrichtung
- 19: Federelement
- 20: Deckscheibe
- 21: Feststellrad
- 22: Drehachse
- 23: Endglied
- 24: Endglied
- 25: Verbindungselement
- 26: Arretiervorrichtung
- 27: Haken
- 28: Ablagevorrichtung
- 29: Tablettfläche
- 30: Flaschenhalter

## Patentansprüche

1. Grillvorrichtung zur Zubereitung von Speisen bestehend aus einem Gestell (1) mit mindestens drei Standfüßen (2), einer am Gestell (1) festgelegten Feuerschale (4) zur Aufnahme des Brennstoffes und einer über der Feuerschale (4) höhenverstellbar am Gestell (1) aufgehängten Grillrosthalterung (7),
**dadurch gekennzeichnet, dass**
die Grillrosthalterung (7) eine im wesentlichen senkrecht angeordnete Haltestange (8) aufweist, an welcher an ihrem unteren, der Feuerschale (7) zugewandten Ende ein aus zwei gebogenen Gabelarmen (11, 12) bestehendes Hängeelement (9) angeordnet ist, wobei an dem der Haltestange (8) abgewandten Ende ein Grillrost (10) dergestalt festgelegt ist, dass der Raum zwischen Grillrostoberfläche und Gabelarmverbindungspunkt (13) frei zugänglich ist.

2. Grillvorrichtung nach Anspruch 1,
**dadurch gekennzeichnet, dass**
die Haltestange (8) aus zwei mittels eines Schwenkgelenkes (14) verbundenen Stangenelementen (15, 16) besteht.

3. Grillvorrichtung nach einem der Ansprüche 1 oder 2,
**dadurch gekennzeichnet, dass**
das Gestell (1) eine im wesentlichen halbkreisförmig gebogene Gestellstange (17) aufweist, an deren den Boden zugewandten unteren Ende die Standfüße (2) und an deren oberen freien Ende eine Aufhängevorrichtung (18) für die Grillrosthalterung (7) angeordnet ist.

4. Grillvorrichtung nach Anspruch 3,
**dadurch gekennzeichnet, dass**
die Aufhängevorrichtung (18) ein Federelement (19) aufweist, welches durch seine Federkraft mindestens einen Teil des durch die Grillrosthalterung (7) bewirkten Gewichtskraft ausgleicht.

5. Grillvorrichtung nach einem der Ansprüche 3 oder 4,
**dadurch gekennzeichnet, dass**
die Aufhängevorrichtung (18) ein Feststellrad (21) zur Fixierung der Grillrosthalterung (7) in unterschiedlicher Höhenposition aufweist.

6. Grillvorrichtung nach Anspruch 4,
**dadurch gekennzeichnet, dass**
das Federelement (19) als die Haltestange (8) umgreifender, oberhalb der Gestellstange (17) angeordnete Schraubenfeder ausgebildet ist.

7. Grillvorrichtung nach einem der Ansprüche 1 bis 6,
**dadurch gekennzeichnet, dass**
das Schwenkgelenk (14) als Kardangelenk ausgebildet ist.

8. Grillvorrichtung nach einem der Ansprüche 1 bis 7,
**dadurch gekennzeichnet, dass**
sich am Gestell (1) eine Arretiervorrichtung (26) zum Einhängen des schräg gestellten Grillrostes (10) befindet.

9. Grillvorrichtung nach einem der Ansprüche 1 bis 8,
**dadurch gekennzeichnet, dass**
an der Gestellstange (17) mindestens eine Halterung für eine Ablagevorrichtung (28) angeordnet ist.

10. Grillvorrichtung nach Anspruch 9,
**dadurch gekennzeichnet, dass**
die Ablagevorrichtung (28) mindestens eine Tablettvorrichtung (29) und einen Flaschenhalter (39) aufweist.
